# EUROPEAN PATENT APPLICATION

(11) **EP 2 214 418 A2**
(43) Date of publication of application: **04.08.2010**
(21) Application number: 10150594.9
(22) Date of filing: 13.01.2010
(51) Int. Cl.: H04R 1/38, H04R 1/08

(54) **Microphone unit**

(30) Priority: 28.01.2009 JP 2009016948
(71) Applicant: Funai Electric Co., Ltd., Daito-shi, Osaka 574-0013 (JP)
(72) Inventor: Inoda, Takeshi, Daito-shi Osaka 574-0013 (JP); Horibe, Ryusuke, Daito-shi Osaka 574-0013 (JP); Tanaka, Fuminori, Daito-shi Osaka 574-0013 (JP)
(74) Representative: Grünecker, Kinkeldey, Stockmair & Schwanhäusser Anwaltssozietät

(57) **Abstract**

A microphone unit comprises a microphone, leg members and a base. The microphone comprises a diaphragm for detecting sound and a housing for containing the diaphragm. The leg members project outwardly from a rear wall of the housing, and are provided near a second through-hole which connects a second inner space to outer space. The base is connected to the leg members to form a gap between the housing and the base. When the microphone unit thus formed in a simple structure and reduced thickness is mounted in a product, the gap allows the outer space to be connected to the second inner space through the second through-hole, making it possible to efficiently guide sound to the second inner space and obtain good differential characteristics.

## Description

### BACKGROUND OF THE INVENTION

### 1. Field of the Invention

The present invention relates to a microphone unit which can be effectively mounted and used in e.g. an electrical or electronics product (hereafter referred to simply as product) such as a mobile phone or a hearing aid, and which detects sound (i.e. vibration of air) and converts the detected sound to an electrical signal for output.

### 2. Description of the Related Art

A microphone unit is known which has a vibratory diaphragm to be vibrated by sound so as to detect the sound by the vibration of the vibratory diaphragm. One of the microphone units of this kind is designed to guide the sound to both front and rear surfaces of the vibratory diaphragm. In such a microphone unit, the vibratory diaphragm is vibrated by the difference between the sound guided to the front surface and the sound guided to the rear surface of the vibratory diaphragm (i.e. difference in phase and amplitude of the vibration waves of air), whereby the sound is detected by the vibration of the vibratory diaphragm. Such a microphone unit is called a differential type microphone unit.

One of such known differential type microphone units has a housing and a vibratory diaphragm provided in the housing so that the inner space of the housing is divided into a first inner space (space on the front surface side of the vibratory diaphragm) and a second inner space (space on the rear surface side of the vibratory diaphragm), and that the front wall of the housing (wall facing the front surface of the vibratory diaphragm) has a first through-hole formed therein to connect the first inner space and an outer space outside the housing, while the rear wall of the housing (wall facing the rear surface of the vibratory diaphragm) has a second through-hole formed therein to connect the second inner space and the outer space outside the housing. In such a differential type microphone unit, sound is guided from the outer space through the first through-hole to the first inner space (i.e. the front surface of the vibratory diaphragm), while the sound is also guided from the outer space through the second through-hole to the second inner space (i.e. the rear surface of the vibratory diaphragm).

However, there is a problem that it is not suitable to mount and use the conventional differential type microphone unit in e.g. a product such as a mobile phone or a hearing aid. More specifically, assuming that the product has a sound receiving opening, and that the conventional microphone is mounted in the product to allow the first through-hole in the front wall of the housing of the microphone to face the sound receiving opening, there is a possibility that the second through-hole in the rear wall of the housing is occluded by some components in the product. If the second through-hole is occluded, it is not possible to effectively guide the sound to the second inner space (to the rear surface of the vibratory diaphragm), making it impossible to obtain good differential characteristics and reducing the quality of the microphone.

There are other known microphone units in the art. For example, Japanese Laid-open Patent Publication 2008-48329 discloses a microphone unit having a circuit board and a vibratory diaphragm supported by a support to the circuit board, in which the support has a leg member, while a space is formed between the vibratory diaphragm and the circuit board. Japanese Laid-open Patent Publication 2008-219238 discloses a microphone unit having a vibratory diaphragm supported by a support ring in a unit case, in which the support ring has a leg member, and a space is formed between the vibratory diaphragm and the unit case. Further, Japanese Patent 3601900 discloses a microphone unit having a housing in which a cylindrical tube-shaped rib for inserting a differential microphone is provided. However, these known microphone units do not solve the above problem.

### SUMMARY OF THE INVENTION

An object of the present invention is to provide a high quality microphone unit which is simple in structure with a reduced thickness, and which makes it possible to obtain good differential characteristics even when mounted in a product.

According to the present invention, this object is achieved by a microphone unit comprising: a vibratory diaphragm for detecting sound; a housing having an inner space for containing the vibratory diaphragm; at least one leg member projecting outwardly from the housing; and a base connected to the at least one leg member. The vibratory diaphragm divides the inner space of the housing into a first inner space and a second inner space. The housing has a first through-hole formed therein to connect the first inner space and an outer space outside the housing and a second through-hole formed therein to connect the second inner space and the outer space. The at least one leg member is provided near the second through-hole. Further, a gap to connect the second inner space and the outer space through the second through-hole is formed between the housing and the base or between the base and a part of the at least one leg member.

According to the microphone unit of the present invention when mounted in a product such as a mobile phone or a hearing aid, the gap formed between the housing and the base or between the base and a part of the at least one leg member allows the outer space to be connected to the second inner space through the second through-hole. Thus, even when mounted in the product, the microphone unit makes it possible to efficiently guide sound to the second inner space through the gap formed between the housing and the base or between the base and the part of the at least one leg member, thereby obtaining good differential characteristics. Furthermore, the gap can be formed in a simple structure and a reduced thickness by connecting the at least one leg member provided near the second through-hole to the base. This makes it possible to achieve a high quality microphone unit which is simple in structure with a reduced thickness, and to obtain good differential characteristics even when mounted in a product.

Preferably, the at least one leg member is a plurality of leg members having the same length, in which the gap is formed between the housing and the base.

Preferably, the at least one leg member is a plurality of leg members which surround an area including the second through-hole and have different lengths, with a long part and a short part of the leg members, in which the gap is formed between the base and the short part of the leg members.

Preferably, the gap has a length of at least 0.15 mm.

Preferably, the microphone unit further comprises a cover for covering the housing in which the cover has a first opening and a second opening formed therein. Here, in a space covered by the cover, a first sound path is formed which connects the first through-hole and the first opening, and a second sound path is also formed which is independent of the first sound path and connects the second through-hole and the second opening.

Preferably, the cover includes a plane portion, in which the first opening and the second opening are formed in the plane portion.

Preferably, the microphone unit further comprises a cover for covering the housing in which the base has a first opening and a second opening formed therein. In a space covered by the cover here, a first sound path is formed which connects the first through-hole and the first opening, and a second sound path is also formed which is independent of the first sound path and connects the second through-hole and the second opening.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG 1A is a schematic cross-sectional view of a microphone unit according to a first embodiment of the present invention, taken along line X-X' of FIG. 1B, while FIG. 1B is a schematic bottom view of the microphone unit;
FIG 2 is a schematic cross-sectional view showing an example of mounting the microphone unit in a product;
FIG. 3 is a schematic bottom view of the microphone unit of according to a second embodiment of the present invention;
FIG 4A is a schematic cross-sectional view of a microphone unit according to a third embodiment of the present invention, taken along line X-X' of FIG. 4B, while FIG. 4B is a schematic bottom view of the microphone unit.
FIG 5 is a schematic bottom view of a microphone unit according to a fourth embodiment of the present invention;
FIG 6 is a schematic bottom view of a microphone unit according to a fifth embodiment of the present invention;
FIG 7 is a schematic cross-sectional view of a microphone unit according to a sixth embodiment of the present invention;
FIG 8 is a schematic cross-sectional view showing an example of mounting the microphone unit in a product;
FIG 9 is a schematic cross-sectional view of a microphone unit according to a seventh embodiment of the present invention; and
FIG 10 is a schematic cross-sectional view showing an example of mounting the microphone unit in a product.

### DESCRIPTION OF THE PREFERRED EMBODIMENTS

Embodiments of the present invention, as best mode for carrying out the invention, will be described hereinafter with reference to the drawings. The present invention relates to a microphone unit. It is to be understood that the embodiments herein are not intended as limiting, or encompassing the entire scope of, the invention. Note that like parts are designated by like reference numerals or characters throughout the drawings.

### (FIRST EMBODIMENT)

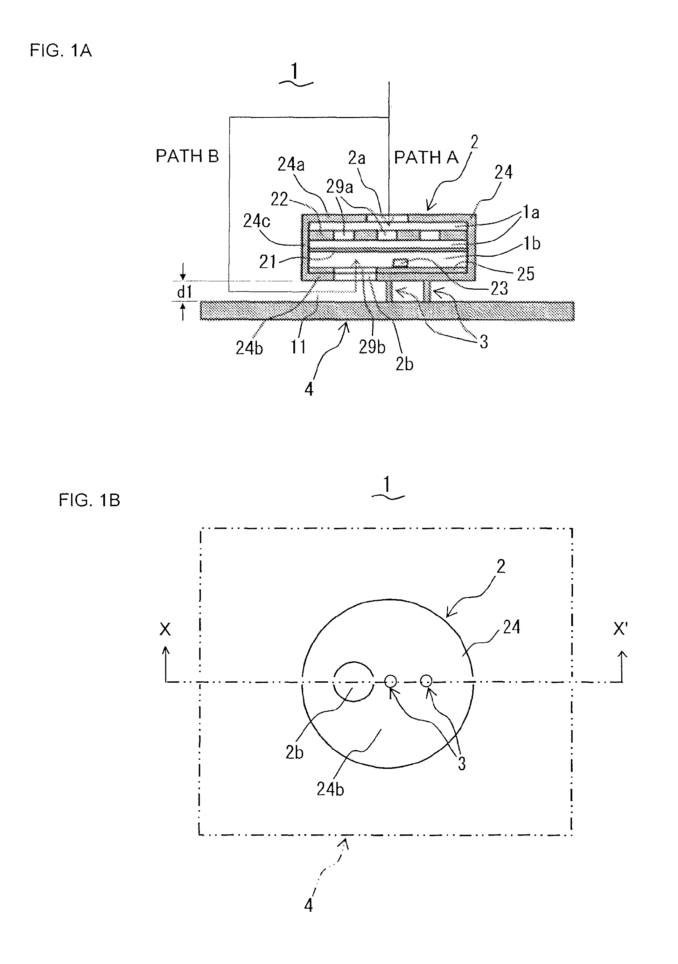

A microphone unit 1 according to a first embodiment of the present invention will be described with reference to FIG. 1A and FIG 1B. FIG. 1A is a schematic cross-sectional view of the microphone unit 1 according to the first embodiment, taken along line X-X' of FIG. 1B, while FIG. 1B is a schematic bottom view of the microphone unit 1. The microphone unit 1 is mounted and used in a product such as a mobile phone or a hearing aid, and detects sound propagating in air (i.e. vibration of air), and further converts the detected sound to an electrical signal for output. The microphone unit 1 comprises a microphone 2 for detecting sound and converting the detected sound to an electrical signal, and also comprises leg members (at least one leg member) 3, a base 4 and so on for securing a guide path to guide the sound to the microphone 2. The microphone 2 comprises: a vibratory diaphragm 21 and a back electrode 22 for detecting sound; a signal processing circuit 23 for converting the sound detected by the vibratory diaphragm 21 and the back electrode 22 to an electrical signal; a housing 24 having an inner space for containing the vibratory diaphragm 21, the back electrode 22, the signal processing circuit 23; and so on.

The microphone unit 1 detects sound from the vibration of the vibratory diaphragm 21. The microphone unit 1 is of a differential type such that sound is guided to both front surface and rear surface of the vibratory diaphragm 21, and that the sound is detected from a vibration of the vibratory diaphragm 21 caused by a difference between the sound guided to the front surface and the sound guided to the rear surface of the vibratory diaphragm 21 (i.e. difference in phase and amplitude of the vibration waves of air). Further, the microphone unit 1 is of an electret condenser type such that an electret (dielectric having residual polarization) is used as the vibratory diaphragm 21 which, together with the back electrode 22, forms a capacitor, and that the vibration of the vibratory diaphragm 21 is detected by a change in electrostatic capacitance of the capacitor, and the detected vibration of the vibratory diaphragm 21 (i.e. detected sound) is converted to an electrical signal.

The housing 24 is cylindrical tube-shaped, and has a disk-shaped front wall 24a, a disk-shaped rear wall 24b facing and parallel to the front wall 24a, and a peripheral side wall 24c contiguous to the front wall 24a and the rear wall 24b. The vibratory diaphragm 21 is provided in the housing 24 so as to be parallel to the front wall 24a and the rear wall 24b of the housing 24. Further, the vibratory diaphragm 21 divides an inner space of the housing 24, which is a space inside the housing 24, into two parts: a first inner space 1a which is a space on the front side of the vibratory diaphragm 21 (on the side of the front wall 24a of the housing 24); and a second inner space 1b which is a space on the rear side of the vibratory diaphragm 21 (on the side of the rear wall 24b of the housing 24). The housing 24 has a first through-hole 2a formed therein through the front wall 24a to connect the first inner space 1a and the outer space which is a space outside the housing 24, while the housing 24 has a second through-hole 2b formed therein through the rear wall 24b to connect the second inner space 1b and the outer space outside the housing 24.

The back electrode 22 is provided in the first inner space 1a so as to be parallel to the vibratory diaphragm 21. The back electrode 22 has multiple electrode holes 29a formed therethrough. The signal processing circuit 23 is mounted on a circuit board 25 which is provided in the second inner space 1 b. More specifically, the circuit board 25 is placed on the rear wall 24b of the housing 24, and has formed therethrough a board hole 29b at a position corresponding to the second through-hole 2b. The signal processing circuit 23 is electrically connected to the back electrode 22 by a conductive wire (not shown). Note that the arrangement of the vibratory diaphragm 21 and the back electrode 22 is not limited to that described above, and, for example, can be reversely arranged (to place the back electrode 22 in the second inner space 1b) as long as the arrangement allows a change in electrostatic capacitance to be detected.

The vibratory diaphragm 21 is formed of an electret (dielectric having residual polarization), while the back electrode 22 is made of a conductor. Thus, the vibratory diaphragm 21 and the back electrode 22 form a capacitor which changes in electrostatic capacitance with a change(s) in distance between the vibratory diaphragm 21 and the back electrode 22 when the vibratory diaphragm 21 is vibrated by sound. Accordingly, the vibratory diaphragm 21 and the back electrode 22 serve to detect sound from the vibration of the vibratory diaphragm 21, and to output the detected sound as a change in electrostatic capacitance. The signal processing circuit 23 detects the vibration of the vibratory diaphragm 21 from the change in electrostatic capacitance, and converts the detected vibration of the vibratory diaphragm 21 (i.e. sound detected by the vibratory diaphragm 21) to an electrical signal.

The leg members (at least one leg member) 3 are provided on the rear wall 24b of the housing 24 so as to project outwardly from the housing 24. The leg members 3 are provided near the second through-hole 2b. In the present embodiment, a plurality of leg members 3, more specifically, two leg members 3 are provided, and have the same length. The leg members 3 each have an end connected or joined to the base 4 e.g. by bonding so that a gap 11 to connect the second inner space 1 b and the outer space through the second through-hole 2b is formed between the rear wall 24b of the housing 24 and the base 4 (between the microphone 2 and the base 4). In the present embodiment, the length d1 of the gap 11 (distance between the base 4 and the rear wall 24b of the housing 24) is 0.15 mm. Note that a conductive wire (not shown) for outputting an electrical signal converted and output from the signal processing circuit 23 is formed on the base 4 and at least one of the leg members 3.

In the microphone unit 1 of the present embodiment, sound from a sound source outside the housing 24 (outside the microphone 2) is guided through the first through-hole 2a (as schematically indicated by path A) to the first inner space 1a (i.e. to the front surface of the vibratory diaphragm 21), and is also guided through the gap 11 formed between the housing 24 and the base 4 and through the second through-hole 2b (as schematically indicated by path B) to the second inner space 1b (i.e. to the rear surface of the vibratory diaphragm 21). Then, the vibratory diaphragm 21 is vibrated by a difference between the sound guided to the first inner space 1a and the sound guided to the second inner space 1b (i.e. difference in phase and amplitude of the vibration waves of air), whereby the sound is detected by the vibration of the vibratory diaphragm 21.

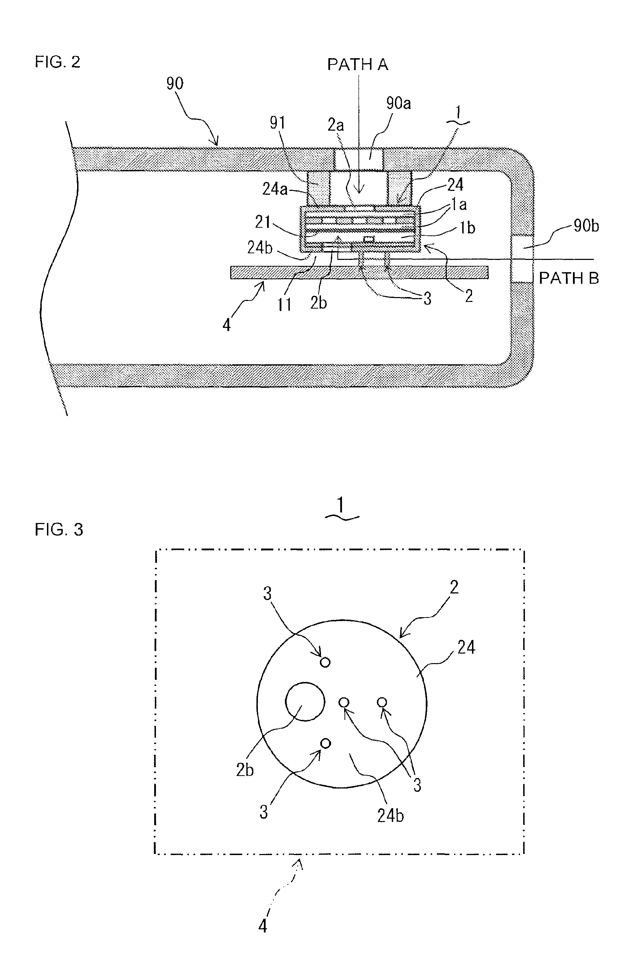

FIG 2 is a schematic cross-sectional view showing an example of mounting the microphone unit 1 of the present embodiment in a product 90 such as a mobile phone or a hearing aid. As shown in FIG 2, the microphone unit 1 of the present embodiment is mounted in the product 90, for example, to allow the first through-hole 2a in the front wall 24a of the housing 24 to face a sound receiving opening 90a of the product 90, and also allow the gap 11 formed between the housing 24 and the base 4 to face a sound receiving opening 90b of the product 90. Here, a sound leakage preventing rubber 91 having a tubular shape with a hollow is used to connect the first through-hole 2a and the sound receiving opening 90a so as to prevent sound leakage. With the microphone unit 1 of the present embodiment mounted in the product 90 in this manner, sound from the sound source is guided from the sound receiving opening 90a to the first inner space 1a through the hollow of the sound leakage preventing rubber 91 and the first through-hole 2a, and is also guided from the sound receiving opening 90b to the second inner space 1b through the gap 11 formed between the housing 24 and the base 4 and through the second through-hole 2b.

According to the microphone unit 1 of the present embodiment when mounted in the product 90, the gap 11 formed between the housing 24 and the base 4 allows the outer space to be connected to the second inner space 1b through the sound receiving opening 90b and the second through-hole 2b. Thus, even when mounted in the product 90, the microphone unit 1 makes it possible to efficiently guide sound to the second inner space 1b (i.e. to the rear surface of the vibratory diaphragm 21) through the gap 11 formed between the housing 24 and the base 4, thereby obtaining good differential characteristics. Furthermore, the gap 11 can be formed in a simple structure and a reduced thickness by connecting the leg members 3 provided near the second through-hole 2b to the base 4. This makes it possible to achieve a high quality microphone unit 1 which is simple in structure with a reduced thickness, and to obtain good differential characteristics even when mounted in a product 90.

Furthermore, the length d1 of the gap 11 of 0.15 mm makes it possible to efficiently guide sound to the second inner space 1b while achieving a reduced thickness of the microphone unit 1, thereby obtaining good differential characteristics. Note that the length d1 can be as short as 0.1 mm minimum to achieve a minimum sufficient level of efficiency to guide sound to the second inner space 1b with a reduced thickness of the microphone unit 1 and obtain good differential characteristics. If the length d1 is shorter than 0.1 mm, there is a possibility that the acoustic characteristics including the differential characteristics may deteriorate. Thus, considering that the effective length of the gap 11 may be shortened by dust or dirt, the length d1 of the gap 11 is preferably at least 0.15 mm to efficiently guide sound to the second inner space 1b with a reduced thickness and good differential characteristics of the microphone unit 1.

### (SECOND EMBODIMENT)

A microphone unit 1 according to a second embodiment of the present invention will be described with reference to FIG 3, which is a schematic bottom view of the microphone unit 1 of the present embodiment. The microphone unit 1 of the present embodiment is the same as that of the first embodiment, except that four leg members 3 having the same length are provided here. The four leg members 3 each have an end connected to the base 4. The microphone unit 1 of the present embodiment has similar functions and effects to those of the microphone unit of the first embodiment.

### (THIRD EMBODIMENT)

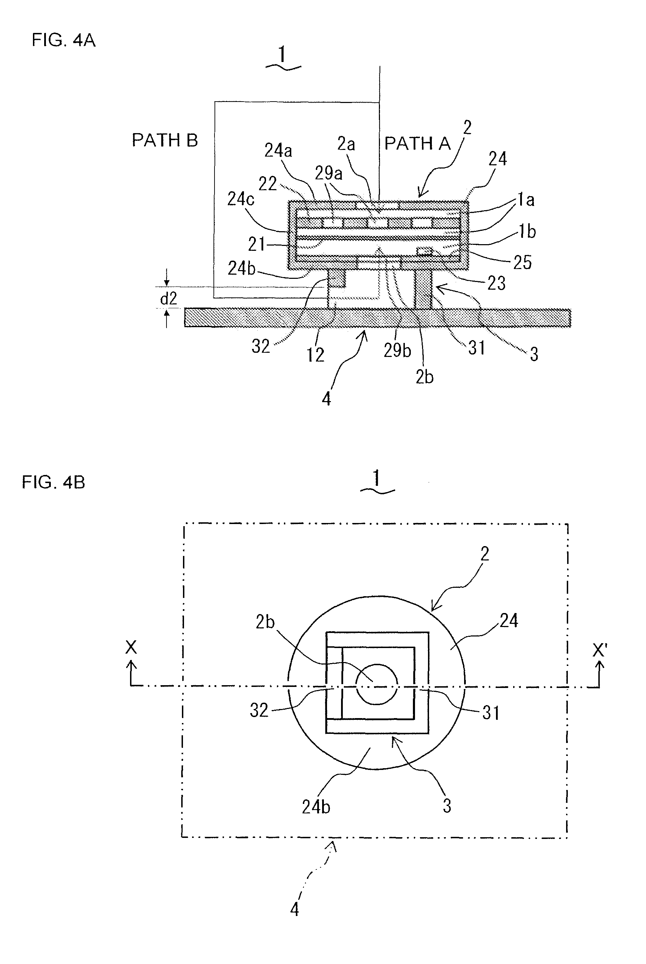

A microphone unit 1 according to a third embodiment of the present invention will be described with reference to FIG. 4A and FIG. 4B. FIG 4A is a schematic cross-sectional view of the microphone unit 1 according to the third embodiment, taken along line X-X' of FIG. 4B, while FIG 4B is a schematic bottom view of the microphone unit 1. The microphone unit 1 of the present embodiment is the same as that of the first embodiment, except that the present embodiment uses leg members 3 which are different from those of the first embodiment. More specifically, the leg members 3 of the present embodiment form a frame shape which surrounds a rectangular area, including the second through-hole 2b, of the rear wall 24b.

Further, the leg members 3 have different lengths (two parts of different lengths). More specifically, the leg members 3 are formed of a long leg member 31 (one part) which has a substantially U-shape (square-cornered U-shape), as seen in plan view, corresponding to three sides of the rectangular area, and a short leg member 32 (the other part) corresponding to the other side of the rectangular area. The long leg member 31 has a substantially U-shaped end connected or joined to the base 4 e.g. by bonding. In the microphone unit 1 of the present embodiment, the end of the long leg member 31 of the leg members 3 is connected to the base 4 so that a gap 12 to connect the second inner space 1b and the outer space through the second through-hole 2b is formed between the base 4 and the short leg member 32 of the leg members 3. In the present embodiment, the length d2 of the gap 12 (distance between the base 4 and the short leg member 32 of the leg members 3) is 0.15 mm.

In the microphone unit 1 of the present embodiment, sound from a sound source outside the housing 24 (outside the microphone 2) is guided through the first through-hole 2a (as schematically indicated by path A) to the first inner space 1a (i.e. to the front surface of the vibratory diaphragm 21), and is also guided through the gap 12 formed between the base 4 and the short leg member 32 of the leg members 3 and through the second through-hole 2b (as schematically indicated by path B) to the second inner space 1b (i.e. to the rear surface of the vibratory diaphragm 21). Then, the vibratory diaphragm 21 is vibrated by a difference between the sound guided to the first inner space 1a and the sound guided to the second inner space 1b (i.e. difference in phase and amplitude of the vibration waves of air), whereby the sound is detected by the vibration of the vibratory diaphragm 21. The microphone unit 1 of the present embodiment is mounted, for example, in a product 90 similarly as for the microphone unit 1 of the first embodiment.

According to the microphone unit 1 of the present embodiment when mounted in the product 90, the gap 12 formed between the base 4 and the short leg member 32 of the leg members 3 allows the outer space to be connected to the second inner space 1b through the sound receiving opening 90b and the second through-hole 2b. Thus, even when mounted in the product 90, the microphone unit 1 makes it possible to efficiently guide sound to the second inner space 1b (i.e. to the rear surface of the vibratory diaphragm 21) through the gap 12 formed between the base 24 and the short leg member 32 of the leg members 3, thereby obtaining good differential characteristics. Furthermore, the gap 12 can be formed in a simple structure with a reduced thickness by connecting the leg members 3 provided near the second through-hole 2b to the base 4. This makes it possible to achieve a high quality microphone unit 1 which is simple in structure with a reduced thickness, and to obtain good differential characteristics even when mounted in a product 90. For the same reason as described for the length d 1 of the gap 11 in the first embodiment, the length d2 of the gap 12 of at least 0.1 mm, preferably at least 0.15 mm, makes it possible to efficiently guide sound to the second inner space 1b so as to obtain good differential characteristics while achieving a reduced thickness of the microphone unit 1.

### (FOURTH EMBODIMENT)

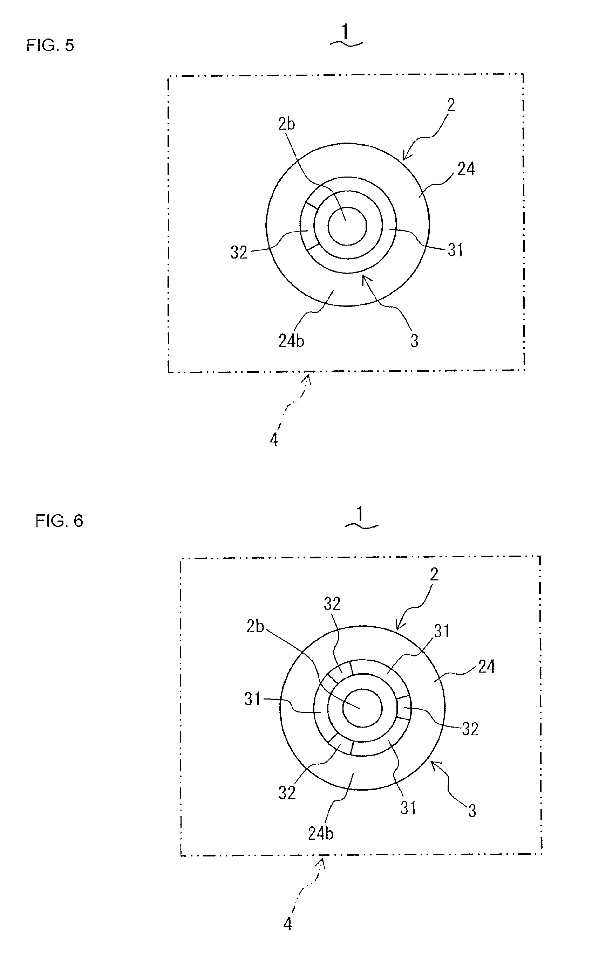

A microphone unit 1 according to a fourth embodiment of the present invention will be described with reference to FIG. 5, which is a schematic bottom view of the microphone unit 1 of the present embodiment. The microphone unit 1 of the present embodiment is the same as that of the third embodiment, except that the leg members 3 of the present embodiment forming a frame shape surround a circular area, including the second through-hole 2b, of the rear wall 24b, in which the leg members 3 are formed of a long leg member 31 and a short leg member 32 which have a circular C-shape and an arc shape as seen in plan view, respectively, to correspond to the circumference of the circular area, and the C-shaped long leg member 31 has an end connected or joined to the base 4 e.g. by bonding. The microphone unit 1 of the present embodiment has similar functions and effects to those of the microphone unit of the third embodiment.

### (FIFTH EMBODIMENT)

A microphone unit 1 according to a fifth embodiment of the present invention will be described with reference to FIG 6, which is a schematic bottom view of the microphone unit 1 of the present embodiment. The microphone unit 1 of the present embodiment is the same as that of the fourth embodiment, except that the leg members 3 of the present embodiment which form a frame shape and surround a circular area, including the second through-hole 2b, of the rear wall 24b, are formed of alternate three long leg members 31 and three short leg member 32 which have an arc shape as seen in plan view, respectively, to correspond to the circumference of the circular area, and the arc-shaped long leg members 32 each has an end connected or joined to the base 4 e.g. by bonding. The microphone unit 1 of the present embodiment has similar functions and effects to those of the microphone unit of the fourth embodiment.

### (SIXTH EMBODIMENT)

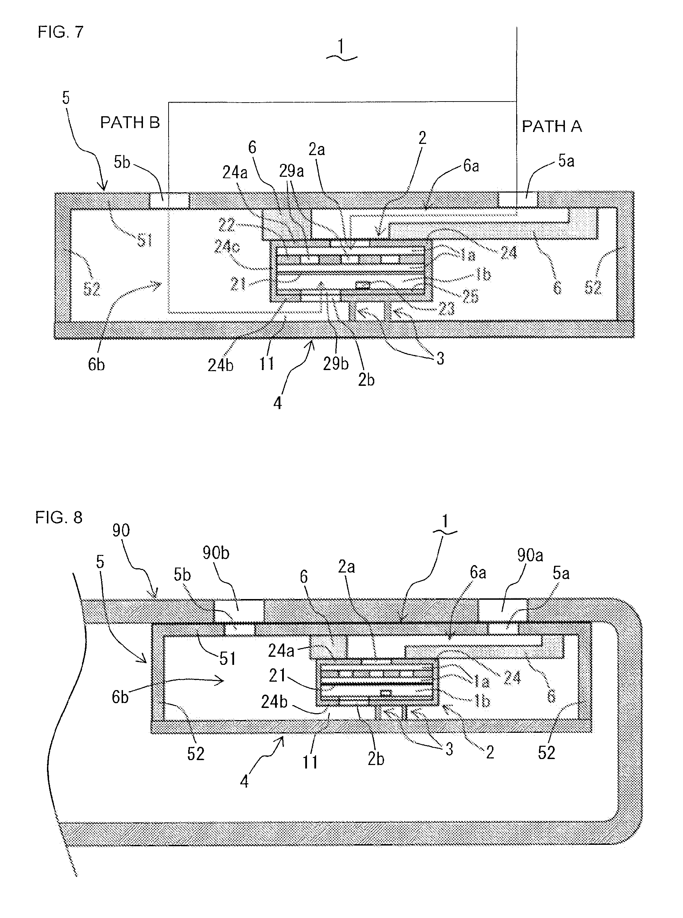

A microphone unit 1 according to a sixth embodiment of the present invention will be described with reference to FIG 7, which is a schematic cross-sectional view of the microphone unit 1 of the present embodiment. The microphone unit 1 of the present embodiment is the same as that of the first embodiment, except that it further comprises a cover 5 for covering the housing 24 (microphone 2), the leg members 3 and the base 4, in which the cover 5 has a first opening 5a and a second opening 5b (and a sound path-forming member (members) 6 described later) formed therein. The cover 5 includes a top wall (i.e. plane portion) 51 and standing walls 52 perpendicular to the top wall 51. The first opening 5a and the second opening 5b are formed in the top wall 51 (i.e. the same plane of the cover 5).

In a space covered by the cover 5 (between the cover 5 and the base 4), there are formed a first sound path 6a which connects the first through-hole 2a and the first opening 5a, and a second sound path 6b which connects the second through-hole 2b and the second opening 5b. The cover 5 has an end (ends of the standing walls) connected to the entire peripheral end of the base 4. In addition, a sound path-forming member (members) 6 is provided in the space covered by the cover 5 (between the cover 5 and the base 4) so as to separate the space into two spatial regions: a spatial region including the first through-hole 2a and the first opening 5a; and a spatial region including the second through-hole 2b and the second opening 5b. The first sound path 6a is formed by one of the spatial regions (including the first through-hole 2a and the first opening 5a) separated by the sound path-forming member (members) 6, while the second sound path 6b is formed by the other spatial region (including the second through-hole 2b and the second opening 5b) separated by the sound path-forming member (members) 6. Due to the presence of the sound path-forming member (members) 6, the first sound path 6a and the second sound path 6b are independent of each other without being connected to each other.

In the microphone unit 1 of the present embodiment, sound from a sound source outside the cover 5 is guided through the first opening 5a, the first sound path 6a and the first through-hole 2a (as schematically indicated by path A) to the first inner space 1a (i.e. to the front surface of the vibratory diaphragm 21), and is also guided through the second opening 5b, the second sound path 6b, the gap 11 formed between the base 4 and housing 24, and the second through-hole 2b (as schematically indicated by path B) to the second inner space 1b (i.e. to the rear surface of the vibratory diaphragm 21). Then, the vibratory diaphragm 21 is vibrated by a difference between the sound guided to the first inner space 1a and the sound guided to the second inner space 1b (i.e. difference in phase and amplitude of the vibration waves of air), whereby the sound is detected by the vibration of the vibratory diaphragm 21.

FIG. 8 is a schematic cross-sectional view showing an example of mounting the microphone unit 1 of the present embodiment in a product 90 such as a mobile phone or a hearing aid. As shown in FIG 8, the microphone unit 1 of the present embodiment is mounted in the product 90, for example, to allow the first opening 5a of the cover 5 to face a sound receiving opening 90a of the product 90, and also allow the second opening 5b of the cover 5 to face a sound receiving opening 90b of the product 90. With the microphone unit 1 mounted in the product 90 in this manner, sound from the sound source is guided from the sound receiving opening 90a to the first inner space 1a through the first opening 5a, the first sound path 6a and the first through-hole 2a, and is also guided from the sound receiving opening 90b to the second inner space 1b through the second opening 5b, the second sound path 6b, the gap 11 formed between the housing 24 and the base 4, and the second through-hole 2b.

The microphone unit 1 of the present embodiment has similar functions and effects to those of the microphone unit of the first embodiment. In addition, in the microphone unit 1 of the present embodiment, the first sound path 6a connecting the first through-hole 2a of the housing 24 and the first opening 5a of the cover 5 is designed to be independent of the second sound path 6b connecting the second through-hole 2b of the housing 24 and the second opening 5b of the cover 5. This makes it possible to prevent interference between the sound guided to the first inner space 1a and the sound guided to the second inner space 1b, thereby obtaining good differential characteristics.

Furthermore, the first opening 5a and the second opening 5b are formed in the top wall 51 (i.e. the same plane of the cover 5). Thus, according to the microphone unit 1 of the present embodiment, when mounted in a product 90, a sound path passing through the inside of the product 90 for guiding sound from outside the product 90 to the first opening 5a and the second opening 5b can be prevented from becoming complex, preventing deterioration of the acoustic characteristics, and making it possible to reduce the thickness of the product 90. Note that the first opening 5a and the second opening 5b are not necessarily formed in the same plane of the cover 5, but can be formed in different planes of the cover 5. For example, the openings 5a and 5b can be formed in the mutually perpendicular planes of the cover 5, such that the first opening 5a is formed in the top wall 51 while the second opening 5b is formed in one of the standing walls 52. It is also possible to form the openings 5a and 5b in the mutually facing planes of the cover 5, such that the first opening 5a is formed in one of the standing walls 52 while the second opening 5b is formed in the opposite one of the standing walls 52.

### (SEVENTH EMBODIMENT)

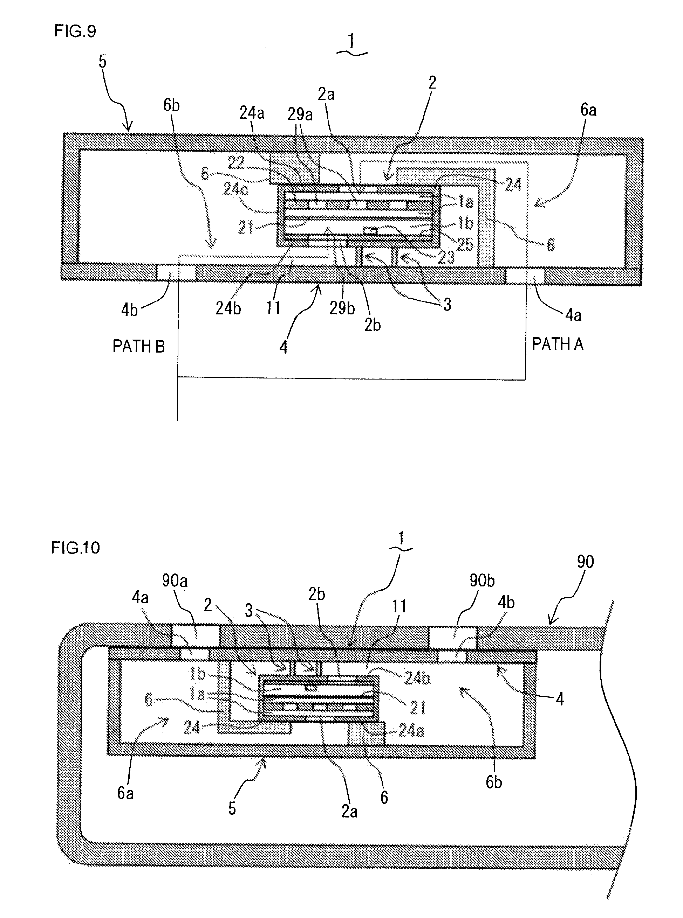

A microphone unit 1 according to a seventh embodiment of the present invention will be described with reference to FIG. 9, which is a schematic cross-sectional view of the microphone unit 1 of the present embodiment. The microphone unit 1 of the present embodiment is the same as that of the first embodiment, except that it further comprises a cover 5 for covering the housing 24 (microphone 2), the leg members 3 and the base 4, in which the base 4 has a first opening 4a and a second opening 4b (and a sound path-forming member (members) 6 described later) formed therein. In a space covered by the cover 5 (between the cover 5 and the base 4), there are formed a first sound path 6a which connects the first through-hole 2a and the first opening 4a, and a second sound path 6b which connects the second through-hole 2b and the second opening 4b.

The cover 5 has an end (ends of its standing walls) connected to the entire peripheral end of the base 4. In addition, a sound path-forming member (members) 6 is provided in the space covered by the cover 5 (between the cover 5 and the base 4) so as to separate the space into two spatial regions: a spatial region including the first through-hole 2a and the first opening 4a; and a spatial region including the second through-hole 2b and the second opening 4b. The first sound path 6a is formed by one of the spatial regions (including the first through-hole 2a and the first opening 4a) separated by the sound path-forming member (members) 6, while the second sound path 6b is formed by the other spatial region (including the second through-hole 2b and the second opening 4b) separated by the sound path-forming member (members) 6. Due to the presence of the sound path-forming member (members) 6, the first sound path 6a and the second sound path 6b are independent of each other without being connected to each other.

In the microphone unit 1 of the present embodiment, sound from a sound source outside the cover 5 is guided through the first opening 4a, the first sound path 6a and the first through-hole 2a (as schematically indicated by path A) to the first inner space 1a (i.e. to the front surface of the vibratory diaphragm 21), and is also guided through the second opening 4b, the second sound path 6b, the gap 11 formed between the base 4 and housing 24, and the second through-hole 2b (as schematically indicated by path B) to the second inner space 1b (i.e. to the rear surface of the vibratory diaphragm 21). Then, the vibratory diaphragm 21 is vibrated by a difference between the sound guided to the first inner space 1a and the sound guided to the second inner space 1b (i.e. difference in phase and amplitude of the vibration waves of air), whereby the sound is detected by the vibration of the vibratory diaphragm 21.

FIG. 10 is a schematic cross-sectional view showing an example of mounting the microphone unit 1 of the present embodiment in a product 90 such as a mobile phone or a hearing aid. As shown in FIG 10, the microphone unit 1 according to the present embodiment is mounted in the product 90, for example, to allow the first opening 4a of the base 4 to face a sound receiving opening 90a of the product 90, and also allow the second opening 4b of the base 4 to face a sound receiving opening 90b of the product 90. With the microphone unit 1 of the present embodiment mounted in the product 90 in this manner, sound from the sound source is guided from the sound receiving opening 90a to the first inner space 1a through the first opening 4a, the first sound path 6a and the first through-hole 2a, and is also guided from the sound receiving opening 90b to the second inner space 1b through the second opening 4b, the second sound path 6b, the gap 11 formed between the housing 24 and the base 4, and the second through-hole 2b.

The microphone unit 1 of the present embodiment has similar functions and effects to those of the microphone unit of the first embodiment. In addition, in the microphone unit 1 of the present embodiment, the first sound path 6a connecting the first through-hole 2a of the housing 24 and the first opening 4a of the base 4 is designed to be independent of the second sound path 6b connecting the second through-hole 2b of the housing 24 and the second opening 4b of the base 4. This makes it possible to prevent interference between the sound guided to the first inner space 1a and the sound guided to the second inner space 1b, thereby obtaining good differential characteristics.

It is to be noted that the present invention is not limited to the above embodiments, and various modifications are possible within the spirit and scope of the present invention. For example, in the first embodiment described above, the number of the leg members can be only one. Further, in the sixth and seventh embodiments, the cover and the sound path-forming member (members) can be formed integrally with each other. Furthermore, in the first to seventh embodiments, the signal processing circuit can be provided on the base. Moreover, the present invention can be applied to not only a microphone unit of a type which detects the vibration of a vibratory diaphragm by a change in electrostatic capacitance, but also a microphone unit of, for example, a type which detects the vibration of a vibratory diaphragm by a distortion of the vibratory diaphragm.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

This application is based on Japanese patent application 2009-016948 filed January 28, 2009, the content of which is hereby incorporated by reference.

## Claims

1. A microphone unit comprising:
a vibratory diaphragm for detecting sound;
a housing having an inner space for containing the vibratory diaphragm;
at least one leg member projecting outwardly from the housing; and
a base connected to the at least one leg member,
wherein the vibratory diaphragm divides the inner space of the housing into a first inner space and a second inner space,
wherein the housing has a first through-hole formed therein to connect the first inner space and an outer space outside the housing and a second through-hole formed therein to connect the second inner space and the outer space,
wherein the at least one leg member is provided near the second through-hole, and
wherein a gap to connect the second inner space and the outer space through the second through-hole is formed between the housing and the base or between the base and a part of the at least one leg member.

2. The microphone unit according to claim 1,
wherein the at least one leg member is a plurality of leg members having the same length, in which the gap is formed between the housing and the base.

3. The microphone unit according to claim 1,
wherein the at least one leg member is a plurality of leg members which surround an area including the second through-hole and have different lengths, with a long part and a short part of the leg members, in which the gap is formed between the base and the short part of the leg members.

4. The microphone unit according to claim 1,
wherein the gap has a length of at least 0.15 mm.

5. The microphone unit according to claim 1,
further comprising a cover for covering the housing in which the cover has a first opening and a second opening formed therein,
wherein in a space covered by the cover, a first sound path is formed which connects the first through-hole and the first opening, and a second sound path is also formed which is independent of the first sound path and connects the second through-hole and the second opening.

6. The microphone unit according to claim 5,
wherein the cover includes a plane portion, in which the first opening and the second opening are formed in the plane portion.

7. The microphone unit according to claim 1,
further comprising a cover for covering the housing in which the base has a first opening and a second opening formed therein,
wherein in a space covered by the cover, a first sound path is formed which connects the first through-hole and the first opening, and a second sound path is also formed which is independent of the first sound path and connects the second through-hole and the second opening.
